# EUROPÄISCHE PATENTSCHRIFT

(11) **EP 3 166 817 B1**
(45) Veröffentlichungstag und Bekanntmachung des Hinweises auf die Patenterteilung: **19.06.2019**
(21) Anmeldenummer: 15734372.4
(22) Anmeldetag: 06.07.2015
(51) Int. Cl.: B60P 1/64, B61D 3/20

(54) **SCHWERLAST-TRANSPORTFAHRZEUG FÜR CONTAINER, INSBESONDERE ISO-CONTAINER, UND VERFAHREN ZUM BELADEN DESSELBEN**
HEAVY-DUTY TRANSPORT VEHICLE FOR CONTAINERS, IN PARTICULAR ISO CONTAINERS, AND METHOD FOR LOADING SAME
VÉHICULE DE GROS TONNAGE POUR LE TRANSPORT DE CONTENEURS, NOTAMMENT DE CONTENEURS ISO, ET PROCÉDÉ DE CHARGEMENT DE CE VÉHICULE

(30) Priorität: 10.07.2014 DE 102014109700
(43) Veröffentlichungstag der Anmeldung: 17.05.2017
(73) Patentinhaber: Konecranes Global Corporation, 05830 Hyvinkää (FI)
(72) Erfinder: HEGEWALD, Mike, 40597 Düsseldorf (DE); WIESCHEMANN, Armin, 46119 Oberhausen (DE); MOUTSOKAPAS, Jannis, 40789 Monheim (DE)
(74) Vertreter: Moser Götze & Partner Patentanwälte mbB
(86) Internationale Anmeldenummer: PCT/EP2015/065386
(87) Internationale Veröffentlichungsnummer: WO 2016/005336

(56) Entgegenhaltungen:
- GB-A- 2 274 274
- US-A- 4 624 188
- US-A- 4 784 548

## Beschreibung

Die Erfindung betrifft ein Schwerlast-Transportfahrzeug für Container, insbesondere ISO-Container, das flurgebunden und nicht schienengebunden frei verfahrbar ist und eine Ladefläche aufweist, auf der ein erster Container abstellbar ist, sowie offenbart in GB 2 2742 74 A.

Außerdem betrifft die Erfindung ein Verfahren zum Beladen eines derartigen Schwerlast-Transportfahrzeugs.

Typisches Einsatzgebiet derartiger Schwerlast-Transportfahrzeuge sind Umschlaganlagen für Container, insbesondere genormte ISO-Container, und hierbei insbesondere der Transport von Containern innerhalb von Container-Terminals in See- oder Binnenhäfen sowie in Container-Terminals für den kombinierten Verkehr zwischen Straße und Schiene.

In diesem Zusammenhang werden unter ISO-Containern genormte Großraumbeziehungsweise Seefrachtbehälter mit genormten Aufnahmepunkten oder Eckbeschlägen für Lastaufnahmemittel verstanden, die im internationalen Warenverkehr zum Einsatz kommen. Am weitesten verbreitet sind ISO-Container mit einer Breite von 8 Fuß und einer Länge von 20, 40 oder 45 Fuß.

Ein entsprechendes Schwerlast-Transportfahrzeug kann eine Zuladung von mindestens 20 t transportieren. Ein 40 Fuß langer ISO-Container kann in beladenem Zustand bis zu 35 t wiegen. Auch ein Schwerlast-Transportfahrzeug, das leer fährt oder einen leeren ISO-Container transportiert, soll unter dieses Verständnis fallen, soweit dieses Fahrzeug eine Zuladung von mindestens 20 t transportieren kann.

Derartige Schwerlast-Transportfahrzeuge weisen üblicherweise mit Luft befüllte Gummireifen auf und sind hierüber flurgebunden, aber nicht schienengebunden und somit frei verfahrbar. Dementprechend sind die vorliegend betroffenen Schwerlast-Transportfahrzeuge von Schienenfahrzeugen und insbesondere von Eisenbahnwagons zu unterscheiden. Die Schwerlast-Transportfahrzeuge können darüber hinaus manuell über einen in einer Fahrerkabine mitfahrenden Fahrer, halb-automatisch oder bei so genannten Automated Guided Vehicles (AGV), die keine Fahrerkabine aufweisen, vollautomatisch und somit fahrerlos betrieben werden. Der Antrieb dieser Schwerlast-Transportfahrzeuge erfolgt üblicherweise dieselelektrisch, dieselhydraulisch oder vollelektrisch.

Schwerlast-Transportfahrzeuge, welche einer der vorbeschriebenen Arten entsprechen, sind beispielsweise aus der deutschen Offenlegungsschrift DE 10 2009 025 051 A1 bekannt.

Des Weiteren ist aus der europäischen Patentanmeldung EP 323 394 A1 ein Transportfahrzeug bekannt, mit dem zugleich mehrere leere Container transportiert werden können. Hierfür werden die zuvor nebeneinander und/oder übereinander positionierten Container vor dem Transport mit ihren Eckbeschlägen über so genannte Twistlocks zu einer Transporteinheit verbunden und anschließend auf einer Ladefläche des Transportfahrzeugs abgestellt.

Aus der US 4 784 548 A ist ein schienengebunden verfahrbarer Eisenbahnwagon bekannt, auf dessen Ladefläche ein erster Container abstellbar ist. Der Eisenbahnwagon umfasst ein rahmenförmiges Gestell, das sich neben der Ladefläche beziehungsweise Stellfläche für den ersten Container von der Ladefläche vertikal nach oben weg erstreckt und auf dem oberhalb des ersten Containers ein zweiter Container abgestellt werden kann. Das Gestell weist im Bereich seiner Ecken Tragelemente auf, über die der zweite Container mit seinen Containerecken aufgenommen und getragen werden kann.

Hiervon ausgehend es ist die Aufgabe der vorliegenden Erfindung, ein verbessertes Schwerlast-Transportfahrzeug für Container, insbesondere ISO-Container, mit erhöhter Transportleistung sowie ein Verfahren zum Beladen desselben bereit zu stellen.

Diese Aufgabe wird durch ein Schwerlast-Transportfahrzeug mit den Merkmalen des Anspruchs 1 und ein Verfahren mit den Merkmalen des Anspruchs 17 gelöst. In den Unteransprüchen 2 bis 16 und 18 sind vorteilhafte Ausgestaltungen der Erfindung angegeben.

Ein Schwerlast-Transportfahrzeug für Container, insbesondere ISO-Container, das flurgebunden und nicht schienengebunden frei verfahrbar ist und eine Ladefläche aufweist, auf der ein erster Container abstellbar ist, wird dadurch verbessert, dass auf dem ersten Container ein zweiter Container abstellbar ist und das Schwerlast-Transportfahrzeug mindestens eine Führung aufweist, mittels derer der zweite Container, insbesondere dessen untere Eckbeschläge, beim Abstellen auf dem ersten Container, insbesondere auf dessen oberen Eckbeschlägen, führbar ist. Durch die Führung wird in vorteilhafter Weise erreicht, dass beim Abstellen des zweiten Containers auf dem unteren ersten Container die unteren Eckbeschläge des oberen zweiten Containers einfach und schnell auf den entsprechenden oberen Eckbeschlägen des unteren ersten Containers positioniert und miteinander in Deckung gebracht werden. Die Führung dient zugleich der Sicherung des abgestellten oberen zweiten Containers während Transportfahrten. Insbesondere ein Verrutschen der übereinander angeordneten Eckbeschläge wird hierbei ausschließlich durch die Führung verhindert, so dass ein zusätzliches Verbinden der Eckbeschläge, beispielsweise über Twistlocks, nicht erforderlich ist. Somit kann das Transportvolumen des Schwerlast-Transportfahrzeugs bei gleicher Fahrzeit und gleichem Fahrweg erhöht werden.

Erfindungsgemäß ist in konstruktiv einfacher Weise vorgesehen, dass die Führung über eine Positioniervorrichtung zwischen einer Beladeposition und einer Freigabeposition bewegbar ist.

Eine präzise Führung und Sicherung beim Abstellen beziehungsweise ein sicherer Entladevorgang des zweiten Containers wird in einfacher Weise dadurch erreicht, dass in der Beladeposition die Führung an dem ersten Container, vorzugsweise an einem oberen Eckbeschlag des ersten Containers, anliegt und in der Freigabeposition die Führung von dem ersten Container beabstandet angeordnet ist.

Ein Ausgleich von Abmessungstoleranzen sowie von Beladungsungenauigkeiten des ersten Containers kann in vorteilhafter Weise dadurch ausgeglichen werden, dass die Führung an mindestens einem Positionierarm der Positioniervorrichtung gelagert ist, der an dem Schwerlast-Transportfahrzeug translatorisch oder rotatorisch, vorzugsweise in einer Längsrichtung des Schwerlast-Transportfahrzeugs, zwischen der Beladeposition und der Freigabeposition bewegbar gelagert ist.

Ein einfaches Bewegen der Positioniervorrichtung wird dadurch erreicht, dass die Positioniervorrichtung einen Positionierantrieb aufweist, über den die Positioniervorrichtung, insbesondere der Positionierarm, bewegbar ist.

In konstruktiv einfacher Weise ist vorgesehen, dass der Positionierantrieb als Linearantrieb ausgebildet ist und vorzugsweise einen unterhalb der Ladefläche angeordneten Riementrieb, Kettentrieb, Ritzel-Zahnstangentrieb oder Hubzylinder, insbesondere Elektrozylinder oder Hydraulikzylinder, umfasst.

Eine zuverlässige und konstruktiv einfache Führung sowie Sicherung der Container wird dadurch erreicht, dass die Führung eine erste Führungsfläche und eine zweite Führungsfläche aufweist, in der Beladeposition die erste Führungsfläche an einer Kopfseite des ersten Containers und/oder die zweite Führungsfläche an einer Längsseite des ersten Containers, vorzugsweise an einem oberen Eckbeschlag des ersten Containers, anliegt.

Ein flexibler Einsatz in Bezug auf unterschiedliche Containerhöhen wird in vorteilhafter Weise dadurch erreicht, dass sich in der Beladeposition die erste Führungsfläche und die zweite Führungsfläche über eine Höhe erstrecken, in der die oberen Eckbeschläge eines beliebigen auf der Ladefläche abgestellten Containers, insbesondere eines ISO-Containers mit einer Containerhöhe von 8 Fuß bis 9 Fuß und 6 Zoll, angeordnet sind und vorzugsweise in der Beladeposition die erste Führungsfläche parallel bezüglich der Kopfseite und die zweite Führungsfläche parallel bezüglich der Längsseite ausgerichtet ist.

Dadurch, dass sich oberhalb der ersten Führungsfläche und oberhalb der zweiten Führungsfläche jeweils eine Einführfläche anschließt, die sich in der Beladeposition jeweils schräg nach oben und vom Container weg gerichtet erstreckt, kann auch ein beim Absenken stärker pendelnder Container von den Führungen, insbesondere den Einführflächen, erfasst und eingefangen werden. Dies vereinfacht und beschleunigt den Beladevorgang.

In konstruktiv einfacher Weise ist außerdem vorgesehen, dass jede Führung drehbar, insbesondere um eine quer, vorzugsweise horizontal, zu einer Längsrichtung des Schwerlast-Transportfahrzeugs ausgerichtete Pendelachse pendelnd, oder drehfest an dem mindestens einen Positionierarm gelagert ist. Insbesondere bei rotatorisch bewegbarem Positionierarm und gelenkig um die Pendelachse montierten Führungen kann aufgrund der kreisbahnförmig von der Freigabeposition in die Beladeposition bewegbaren Führungen der Ausgleich von Abmessungstoleranzen und Beladungsungenauigkeiten weiter verbessert werden.

In vorteilhafter Weise lässt sich die Zuverlässigkeit weiter dadurch erhöhen, dass die Führung derart drehbar gelagert ist, dass die Führungsflächen in jeder Position der Führung, insbesondere in jeder von der Beladeposition abweichenden Position der Führung, vertikal ausgerichtet sind.

Die Zuverlässigkeit wird in konstruktiv einfacher Weise weiter dadurch gesteigert, dass die Führung im Bereich der Pendelachse zwei Anschläge aufweist, um ein Pendeln der Führung um die Pendelachse zu begrenzen.

Eine besonders sichere Führung und Sicherung für Transportfahrten wird dadurch erreicht, dass zwei Führungen an einem ersten Ende und/oder zwei Führungen an einem zweiten Ende des Schwerlast-Transportfahrzeugs derart angeordnet sind, dass in der Beladeposition an dem ersten Ende und/oder an dem zweiten Ende an jedem der oberen Eckbeschlägen des ersten Containers jeweils eine der Führungen anliegt.

In konstruktiv einfacher Weise ist vorgesehen, dass die zwei Führungen an dem ersten Ende und/oder die zwei Führungen an dem zweiten Ende jeweils miteinander verbunden sind, vorzugsweise an einem Querträger gelagert sind, und über den mindestens einen Positionierarm gleichläufig bewegbar sind.

Alternativ ist in konstruktiv einfacher Weise vorgesehen, dass jede Führung drehbar an zwei Positionierarmen gelagert ist, die nach Art einer Parallelogrammführung miteinander gekoppelt und über den Positionierantrieb gleichläufig bewegbar gelagert sind.

In vorteilhafter Weise ist vorgesehen, dass das Schwerlast-Transportfahrzeug als fahrerloses Transportfahrzeug ausgebildet ist.

Ein Verfahren zum Beladen eines entsprechenden Schwerlast-Transportfahrzeugs, wobei in einem ersten Beladungsschritt der erste Container auf der Ladefläche abgestellt wird, wird dadurch verbessert, dass während des ersten Beladungsschritts jede Führung in der Freigabeposition angeordnet ist und nach dem Abstellen des ersten Containers jede Führung in die Beladeposition bewegt wird. Hierdurch wird der untere erste Container zusätzlich gesichert, auch wenn auf dem ersten Container kein zweiter Container abgestellt wird.

Ein besonders sicheres und präzises Beladen des Schwerlast-Transportfahrzeugs für einen so genannten Doppelstocktransport wird dadurch erreicht, dass in einem zweiten Beladungsschritt der zweite Container auf dem ersten Container abgestellt wird und hierbei der zweite Container, insbesondere dessen untere Eckbeschläge, über mindestens eine Führung auf den ersten Container, insbesondere auf dessen obere Eckbeschläge, geführt wird. Hinsichtlich des Verfahrens ergeben sich ebenfalls die oben in Bezug auf das Schwerlast-Transportfahrzeug bereits dargelegten Vorteile.

Ein Ausführungsbeispiel der Erfindung wird anhand der nachfolgenden Beschreibung näher erläutert. Es zeigen:
Figur 1a eine perspektivische Ansicht eines Schwerlast-Transportfahrzeugs in einer ersten Ausführungsform
Figur 1b eine Seitenansicht des Schwerlast-Transportfahrzeugs gemäß Figur 1a,
Figuren 2a und 2b eine weitere Seitenansicht des Schwerlast-Transportfahrzeugs gemäß Figur 1a in verschiedenen Beladungssituationen,
Figuren 3a und 3b eine Seitenansicht des Schwerlast-Transportfahrzeugs in einer zweiten Ausführungsform in verschiedenen Beladungssituationen,
Figuren 4a und 4b eine Seitenansicht des Schwerlast-Transportfahrzeugs in einer dritten Ausführungsform in verschiedenen Beladungssituationen und
Figuren 5a und 5b eine Seitenansicht des Schwerlast-Transportfahrzeugs in einer vierten Ausführungsform in verschiedenen Beladungssituationen.

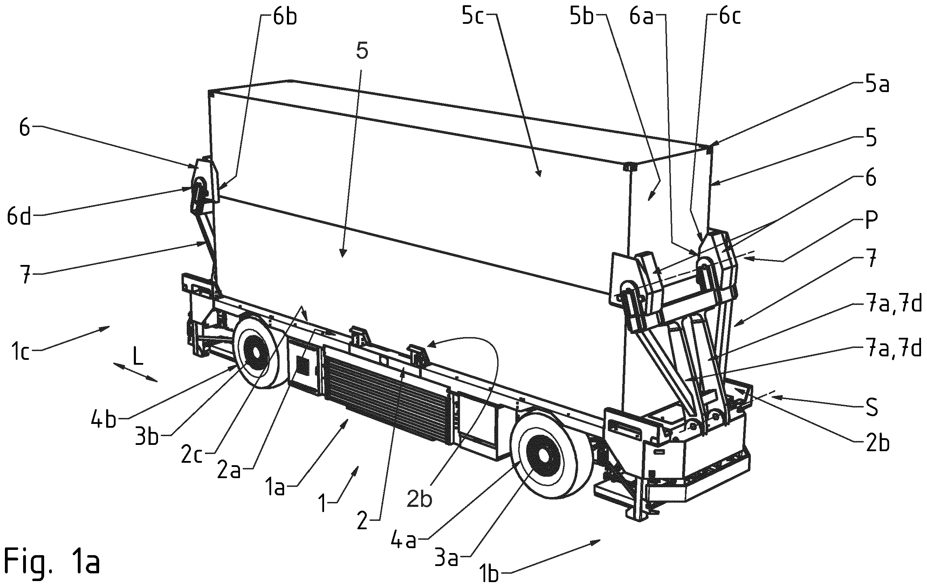

Die Figur 1a zeigt eine perspektivische Ansicht eines flurgebundenen und fahrerlosen Schwerlast-Transportfahrzeugs 1 für Container 5, insbesondere ISO-Container, nach Art eines AGV ohne Fahrerkabine. Das als Vierradfahrzeug ausgebildete Schwerlast-Transportfahrzeug 1 besteht im Wesentlichen aus einem Fahrzeugrahmen 2, an dem auf einer gemeinsamen Vorderachse 3a zwei vordere Räder 4a und auf einer gemeinsamen Hinterachse 3b zwei hintere Räder 4b gelagert sind. Die vier Räder 4a, 4b sind mit einer Bereifung versehen, die vorzugsweise eine mit Luft befüllte Gummibereifung ist. Über die Räder 4a ist das flurgebundene Schwerlast-Transportfahrzeug 1 frei und dementsprechend nicht schienengebunden verfahrbar.

Außerdem umfasst das Schwerlast-Transportfahrzeug 1 einen Fahrantrieb, der im Wesentlichen aus einem vorderen Elektromotor, einem vorderen Verteilgetriebe, einem hinteren Elektromotor und einem hinteren Verteilgetriebe besteht. Der vordere Elektromotor ist in Längsrichtung L des Schwerlast-Transportfahrzeuges 1 gesehen zentral und im Bereich der Vorderachse 3a unter dem Fahrzeugrahmen 2 befestigt. Der hintere Elektromotor ist in Längsrichtung L des Schwerlast-Transportfahrzeuges 1 gesehen zentral und im Bereich der Hinterachse 3b unter dem Fahrzeugrahmen 2 befestigt. Der vordere Elektromotor treibt über das vordere Verteilgetriebe die beiden vorderen Räder 4a an und der hintere Elektromotor über das hintere Verteilgetriebe die beiden hinteren Räder 4b. Das Schwerlast-Transportfahrzeug 1 hat somit einen Allradantrieb. Der Fahrantrieb kann dieselelektrisch oder vollelektrisch mit einer Batterie, insbesondere einer Bleibatterie, ausgebildet sein.

Von dem Fahrzeugrahmen 2 wird eine ebene Ladefläche 2a zum Abstellen von mindestens einem zu transportierenden Container 5 getragen. Das Schwerlast-Transportfahrzeug 1 ist jedoch so ausgelegt, dass ein Zweierstapel von 40 oder 45 Fuß langen Containern 5 oder prinzipiell auch ein oder zwei Zweierstapel von 20 Fuß langen Containern 5 transportiert werden kann, wobei die Container 5 jeweils maximal beladen sein können. Auch ist es grundsätzlich möglich, einen Stapel mit zwei hintereinander unmittelbar auf der Ladefläche 2a abgestellten unteren 20 Fuß langen Containern 5 und einem auf diesen abgestellten 45 Fuß langen Container 5 zu bilden. Das Schwerlast-Transportfahrzeug 1 ist dementsprechend für eine maximale Zuladung von etwa 70 t ausgelegt.

Das in Figur 1a abgebildete Schwerlast-Transportfahrzeug 1 ist mit einem unmittelbar auf der Ladefläche 2a abgestellten unteren ersten Container 5 und einem darauf abgestellten oberen zweiten Container 5 beladen. Hierbei ist der obere zweite Container 5 mit seinen unteren Eckbeschlägen 5a, die auch als Corner-Castings bezeichnet werden, auf entsprechenden oberen Eckbeschlägen 5a des unteren ersten Containers 5 abgestellt. Die einander auf diese Weise zugeordneten Eckbeschläge 5a sind nicht, insbesondere nicht über so genannte Twistlocks, miteinander verbunden. Beide Container 5 sind ISO-Container mit einer Länge von 40 Fuß. Die Ladefläche 2a ist jedoch so dimensioniert, dass auch ein 45 Fuß langer oder hintereinander zwei 20 Fuß lange und mit ihrer Längserstreckung in Längsrichtung L ausgerichtete Container 5 abgestellt und wie nachfolgend beschrieben entsprechende Zweierstapel gebildet werden können.

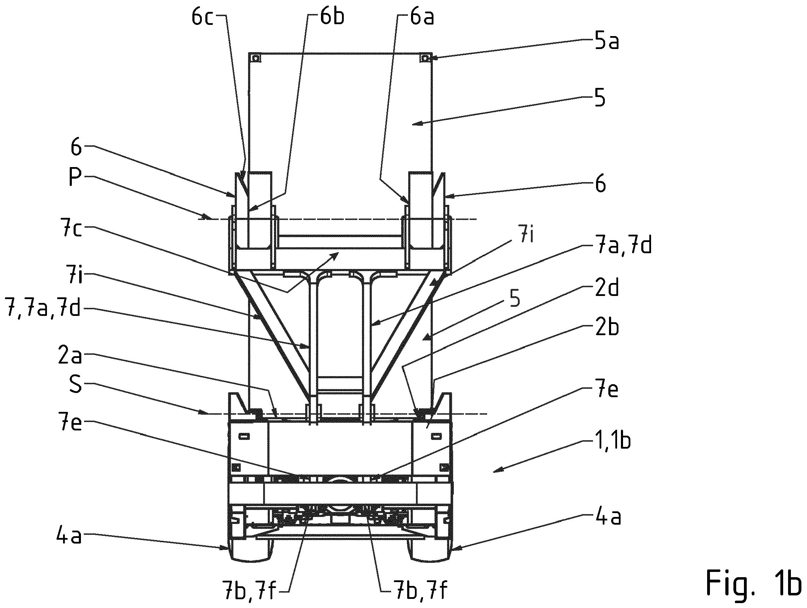

Auf der Ladefläche 2a sind mehrere auch als Einweiser bezeichnete Führungselemente 2b angeordnet, um auf der Ladefläche 2a eine im Wesentlichen rechteckige Stellfläche 2c für den oder die unteren ersten Container 5 zu begrenzen. Hierbei sind die Führungselemente 2b wandartig in einem Randbereich der Ladefläche 2a umlaufend und voneinander beabstandet angeordnet. Ausgehend von ihrer Befestigung an der Ladefläche 2a verlaufen alle Führungselemente 2b schräg nach oben und außen. Durch diese trichterartige Anordnung dienen die Führungselemente 2b beim Abstellen eines Containers 5 auf der Ladefläche 2a als Führung oder Anschlag. Ein Container 5, der beim Herablassen durch einen Kran an dessen Lastaufnahmemittel, beispielsweise in Form eines so genannten Spreaders, hängend pendelt und daher bezüglich der Stellfläche 2c ausgerichtet werden muss, schlägt insbesondere mit seinen unteren Eckbeschlägen 5a zunächst an den Führungselementen 2b an, wird an diesen ausgerichtet und beim weiteren Herablassen auf die Stellfläche 2c geführt. Außerdem dienen die Führungselemente 2b zur Sicherung gegen ein Verrutschen quer zu der Längsrichtung L unmittelbar auf der Ladefläche 2a abgestellter Container 5. Zur Sicherung von Containern 5 auf der Ladefläche 2a sind außerdem Sicherungselemente 2d (siehe Figur 1b) vorgesehen, die ein Verrutschen des Containers 5 in der Längsrichtung L verhindern. Um auf diese Weise Container 5 der oben genannten verschiedenen Containergrößen sichern zu können, sind die Sicherungselemente 2d rasterartig voneinander beabstandet auf der Ladefläche 2a angeordnet.

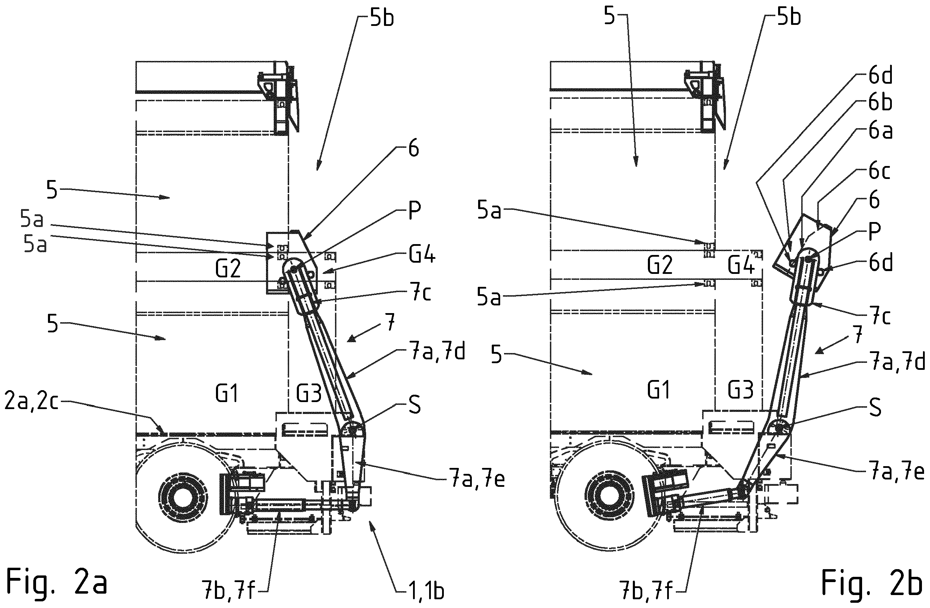

Das Schwerlast-Transportfahrzeug 1 weist im Bereich seines in Längsrichtung L gesehen ersten Endes 1b zwei Führungen 6 auf, um beim Abstellen des oberen zweiten Containers 5 insbesondere dessen untere Eckbeschläge 5a auf die oberen Eckbeschläge 5a des unteren ersten Containers 5 zu führen. Die beiden Führungen 6 sind gemeinsam über eine Positioniervorrichtung 7 zwischen einer Beladeposition (siehe Figuren 1a, 1b und 2a) und einer Freigabeposition (siehe Figur 2b) bewegbar.

In gleicher Weise sind am gegenüberliegenden zweiten Ende 1c zwei weitere Führungen 6 und eine weitere Positioniervorrichtung 7 angeordnet, so dass für jeden der vier Eckbeschläge 5a jeweils eine Führung 6 vorgesehen ist. Die nachfolgenden Ausführungen beziehen sich auf das erste Ende 1b, gelten jedoch analog für das zweite Ende 1c.

In einem ersten Beladungsschritt wird ein erster Container 5 auf die leere Ladefläche 2a des Schwerlast-Transportfahrzeuges 1 gesetzt, wobei sich die Positioniervorrichtung 7 und die Führungen 6 in der Freigabeposition befinden. In der Freigabeposition liegen die Führungen 6 nicht an dem ersten Container 5 an, sondern sind hiervon zumindest horizontal beabstandet angeordnet. Unabhängig davon, ob im weiteren Verlauf ein zweiter Container 5 auf dem bereits auf die Ladefläche 2a geladenen ersten Container 5 abgesetzt wird oder eine Transportfahrt nur mit dem ersten Container 5 erfolgt, werden nach dem Abstellen des ersten Containers 5 die Führungen 6 über die Positioniervorrichtung 7 aus der Freigabeposition in die Beladeposition bewegt. In der Beladeposition, die in den Figuren 1a, 1b und 2a dargestellt ist, liegt jede Führung 6 an einem der oberen Eckbeschläge 5a des ersten Containers 5 an, die dem ersten Ende 1b zugewandt sind. Auf diese Weise wird der erste Container 5 zusätzlich gegen Verrutschen gesichert und es wird verhindert, dass die Führungen 6 und die Positioniervorrichtung 7 über die Fahrzeugaußenkontur hinaus ragen.

Um beim Entladen des Schwerlast-Transportfahrzeugs 1 den oberen zweiten Container 5 von dem unteren ersten Container 5 sowie den ersten Container 5 selbst anheben und wegbewegen zu können, werden die Führungen 6 über die Positioniervorrichtung 7 aus der Beladeposition zurück in die Freigabeposition bewegt.

Die Führungen 6 bilden für den abzustellenden und ebenfalls 40 Fuß langen zweiten Container 5 - vergleichbar mit den Führungselementen 2b für den unteren ersten Container 5 - eine Art Anschlag aus, der beim Herablassen des an einem Spreader hängenden zweiten Containers 5 dessen Pendelbewegungen in horizontalen Richtungen, insbesondere in Längsrichtung L und quer dazu, begrenzt. Hierfür sind die Führungen 6 als eine Art winkelprofilförmige Führungsschuhe aus jeweils einem ersten Führungsblock mit einer ersten Führungsfläche 6a und einem zweiten Führungsblock mit einer zweiten Führungsfläche 6b ausgebildet. In der Beladeposition liegt jede Führung 6 mit der ersten Führungsfläche 6a an einer Kopfseite 5b des unteren ersten Containers 5 an einem oberen Eckbeschlag 5a an, wobei sich die erste Führungsfläche 6a parallel zu der Kopfseite 5b erstreckt. Die zweite Führungsfläche 6b liegt an einer Längsseite 5c des unteren ersten Containers 5 an dem oberen Eckbeschlag 5a des ersten Containers 5 an und erstreckt sich parallel bezüglich der Längsseite 5c. Aufgrund von Beladungsungenauigkeiten des ersten Containers 5 und Toleranzen hinsichtlich der Abmessungen der Container 5 ist es möglich, dass in der Beladeposition nur eine oder keine der Führungen 6 mit der zweiten Führungsfläche 6b anliegt.

Die Figur 1b zeigt eine Seitenansicht auf das erste Ende 1b des Schwerlast-Transportfahrzeugs 1 gemäß Figur 1a. In Figur 1b ist dargestellt, dass sich die erste Führungsfläche 6a und die zweite Führungsfläche 6b in der Beladeposition über eine Höhe erstrecken, in der die oberen Eckbeschläge 5a eines beliebigen auf der Ladefläche 2a abgestellten ersten Containers 5, insbesondere eines ISO-Containers mit einer Containerhöhe von 8 Fuß bis 9 Fuß und 6 Zoll, angeordnet sind (siehe auch Figur 2b). Die beiden Führungsflächen 6a, 6b bilden auf diese Weise einen verlängerten Führungsbereich aus, der unabhängig von der Containerhöhe des unteren ersten Containers 5 ein Anliegen an dessen oberen Eckbeschlägen 5a und somit das Führen des oberen zweiten Containers 5 ermöglicht. Durch die Führungen 6 wird gleichzeitig ein Verrutschen des oberen zweiten Containers 5 verhindert, so dass die Führungen 6 auch zur Sicherung des zweiten Containers 5 beispielsweise während einer Transportfahrt dienen.

Um den beim Herablassen auf den ersten Container 5 pendelnden zweiten Container 5 einfacher in den Bereich der im Beladezustand vertikalen Führungsflächen 6a, 6b einzufädeln, schließt sich oberhalb der ersten Führungsfläche 6a und oberhalb der zweiten Führungsfläche 6b jeweils eine Einführfläche 6c an. Die Einführflächen 6c erstrecken sich in der Beladeposition jeweils schräg nach oben und vom Container 5 weg gerichtet, so dass sich - vergleichbar mit den Führungselementen 2b - eine trichterartige Anordnung der Einführflächen 6c ergibt. Die Führungen 6 dienen mit ihren Führungsflächen 6a, 6b und Einführflächen 6c dementsprechend als Positionierhilfe, um den zweiten Container 5 beim Abstellen mit seinen unteren Eckbeschlägen 5a genau auf den oberen Eckbeschlägen 5a des ersten Containers 5 zu positionieren.

Über die Positioniervorrichtung 7 werden die beiden Führungen 6 an dem ersten Ende 1b gleichläufig zwischen der Beladeposition und der Freigabeposition bewegt. Die beiden Führungen 6 sind hierfür über einen horizontalen Querträger 7c miteinander verbunden, so dass sich eine Art einteilige Führung für die an dem ersten Ende 1b angeordneten Eckbeschläge 5a ergibt. An gegenüberliegenden Enden des Querträgers 7c ist jeweils eine der Führungen 6 um eine quer und horizontal zu der Längsrichtung L des Schwerlast-Transportfahrzeugs 1 ausgerichtete Pendelachse P (siehe auch Figur 1a) pendelnd gelagert. Jede Führung 6 weist im Bereich ihrer Pendelachse P zwei Anschläge 6d auf, um ein Pendeln der Führung 6 um die Pendelachse P zu begrenzen.

Um die Führungen 6 zwischen der Beladeposition und der Freigabeposition zu bewegen, sind die Führungen 6 an zwei Positionierarmen 7a der Positioniervorrichtung 7 gelagert. Indem die Positionierarme 7a jeweils derart drehbar an dem ersten Ende 1b, vorzugsweise an dem Fahrzeugrahmen 2 im Bereich der Ladefläche 2a, gelagert sind, dass die Positionierarme 7a rotatorisch um eine quer und horizontal zu der Längsrichtung L des Schwerlast-Transportfahrzeugs 1 ausgerichtete Schwenkachse S bewegbar sind, bildet jeder Positionierarm 7a ein Hebelsystem aus. Ausgehend von der Schwenkachse S weist dementsprechend jeder Positionierarm 7a einen oberen ersten Hebel des Hebelsystems bildenden ersten Schenkel 7d und einen unteren zweiten Hebel des Hebelsystems bildenden zweiten Schenkel 7e auf. Der erste Schenkel 7d schließt mit dem zweiten Schenkel 7e einen Winkel von weniger als 180 Grad, vorzugsweise etwa 150 bis 170 Grad, besonders bevorzugt etwa 160 Grad, ein. Die Positionierarme 7a sind insbesondere parallel voneinander beabstandet gelagert, wobei die Positionierarme 7a an oberen Enden der ersten Schenkel 7d oberhalb des Fahrzeugrahmens 2 mit dem Querträger 7c verbunden sind. Unterhalb des Fahrzeugrahmens 2 sind die Positionierarme 7a an unteren Enden ihrer zweiten Schenkel 7e mit einem Positionierantrieb 7b (siehe auch Figuren 2a und 2b) verbunden, um eine gleichläufige Bewegung der Positionierarme 7a und damit der Führungen 6 zwischen der Beladeposition und der Freigabeposition zu ermöglichen. Der Positionierantrieb 7b ist als Linearantrieb ausgebildet und umfasst zwei Hubzylinder 7f, vorzugsweise Elektrozylinder oder Hydraulikzylinder, von denen jeweils einer antriebsmäßig und drehbar mit dem zweiten Schenkel 7e eines Positionierarms 7a verbunden ist. In den Figuren 2a und 2b sind die Hubzylinder 7f als Elektrozylinder ausgebildet. Es kann auch lediglich ein Hubzylinder 7f antriebsmäßig mit den Positionierarmen 7a verbunden sein. Selbstverständlich ist es auch denkbar, dass nur ein Positionierarm 7a vorgesehen ist, der mit dem Positionierantrieb 7b und dem Querträger 7c verbunden ist. Darüber hinaus wird jedes Ende des Querträgers 7c über eine Strebe 7i an dem entsprechenden Positionierarm 7a abgestützt, wobei jede Strebe 7i diagonal verlaufend das jeweilige Ende des Querträgers 7c oberhalb der Schwenkachse S mit dem ersten Schenkel 7d des Positionierarms 7a verbindet.

Eine weitere Seitenansicht des ersten Endes 1b des Schwerlast-Transportfahrzeugs 1 gemäß Figur 1a ist in der Beladeposition in Figur 2a und in der Freigabeposition in Figur 2b gezeigt. Insbesondere sind in den Figuren 2a und 2b schematisch verschiedene Beladungssituationen mit beispielhaft möglichen Größen G1 bis G4 des ersten Containers 5 und deren Positionen auf der Ladefläche 2a dargestellt. Hierbei bezeichnet G1 eine erste Größe eines 40 Fuß langen Containers 5 mit einer Containerhöhe von 8 Fuß, G2 eine zweite Größe eines 40 Fuß langen Containers 5 mit einer Containerhöhe von 9 Fuß und 6 Zoll, G3 eine dritte Größe eines 20 oder 45 Fuß langen Containers 5 mit einer Containerhöhe von 8 Fuß und G4 eine vierte Größe eines 20 oder 45 Fuß langen Containers 5 mit einer Containerhöhe von 9 Fuß und 6 Zoll.

Nachdem in dem ersten Beladungsschritt der erste Container 5 der Größe G2 über die Führungselemente 2b auf die Ladefläche 2a beziehungsweise Stellfläche 2c geführt und abgestellt wird, erfolgt die Vorbereitung des zweiten Beladungsschrittes, indem die Führungen 6 über die Positioniervorrichtung 7 durch Ausfahren der Hubzylinder 7f des Positionierantriebs 7b und damit einhergehendes Schwenken der Positionierarme 7a um die Schwenkachse S in die Beladeposition bewegt werden. In dem zweiten Beladungsschritt wird dann der ebenfalls 40 Fuß lange zweite Container 5 auf dem ersten Container 5 abgestellt und hierbei der zweite Container 5 über die Führungen 6 auf den ersten Container 5 geführt. Auch nach dem in Figur 2a bereits erfolgten Abstellen des zweiten Containers 5 bleiben die Führungen 6 und die Positioniervorrichtung 7 in der Beladeposition, um den zweiten Container 5 gegen Verrutschen zu sichern, da die beiden Container 5 nicht über Twistlocks miteinander verbunden sind. Das Bewegen der Führungen 6 in die Beladeposition nach dem Abstellen des ersten Containers 5 erfolgt auch, wenn kein Containerstapel für den Doppelstocktransport gebildet, sondern lediglich ein unterer erster Container 5 transportiert werden soll.

In der in Figur 2b gezeigten Freigabeposition hat die Positioniervorrichtung 7 die Führungen 6 durch Einfahren der Hubzylinder 7f und entsprechendes Schwenken der Positionierarme 7a aus der Beladeposition von dem ersten Container 5 weggeschwenkt, so dass die Führungen 6 von dem unteren ersten Container 5 beabstandet angeordnet sind. Der zweite Container 5 ist hierdurch freigegeben und kann von dem ersten Container 5 gehoben werden. Die Führungen 6 und die Positioniervorrichtung 7 werden ebenfalls in die Freigabeposition bewegt, um den unteren ersten Container 5 in dem ersten Beladungsschritt auf der Ladefläche 2a abstellen zu können. Die der Kopfseite 5b des ersten Containers 5 zugewandten ersten Führungsflächen 6a der Führungen 6 sind aufgrund der pendelnden Lagerung der Führungen 6 in der Freigabeposition nicht parallel zur Kopfseite 5b beziehungsweise vertikal ausgerichtet. Das Pendeln der Führungen 6 um die Pendelachse P wird durch die Anschläge 6d begrenzt.

Wie den Figuren 2a und 2b zu entnehmen ist, sind die Führungen 6 und die Positioniervorrichtung 7 so ausgelegt, dass in der Freigabeposition auch 20 oder 45 Fuß lange Container 5 auf der Ladefläche 2a abgestellt werden können und in der Beladeposition die Führungen 6 an unteren ersten Containern 5 sämtlicher Größen G1, G2, G3 oder G4 anliegen können.

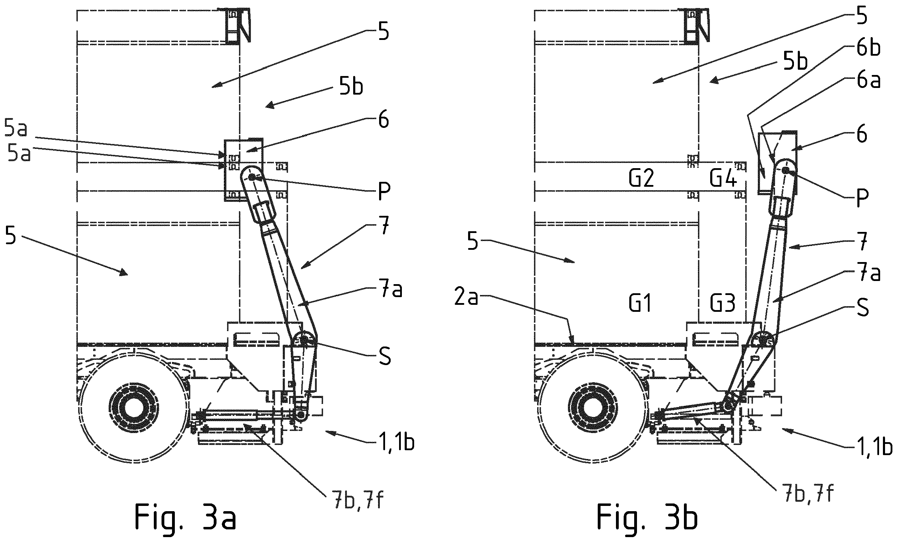

In den Figuren 3a und 3b ist eine Seitenansicht des ersten Endes 1b des Schwerlast-Transportfahrzeugs 1 in einer zweiten Ausführungsform in den Beladungssituationen gemäß den Figuren 2a und 2b dargestellt. Die zweite Ausführungsform unterscheidet sich von der ersten Ausführungsform dadurch, dass die Führungen 6 bezüglich ihrer Schwerpunkte derart drehbar an den Positionierarmen 7a gelagert sind, dass die Führungsflächen 6a, 6b in jeder Position der jeweiligen Führung 6, insbesondere in jeder von der Beladeposition (Figur 3a) abweichenden Position der Führung 6 wie beispielsweise der Freigabeposition (Figur 3b), vertikal ausgerichtet sind. Dementsprechend sind keine Anschläge 6d erforderlich. In der in den Figuren 3a und 3b dargestellten zweiten Ausführungsform sind die Hubzylinder 7f beispielhaft als Hydraulikzylinder ausgebildet.

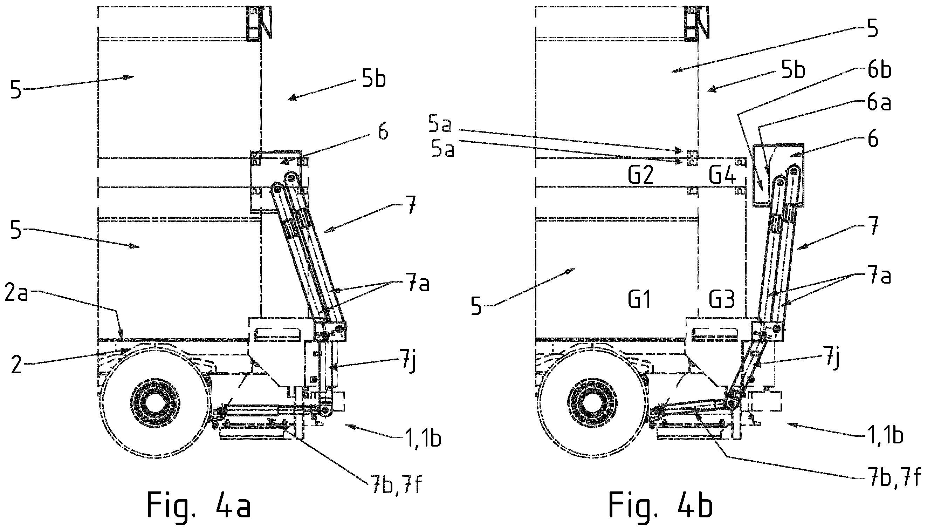

In den Figuren 4a und 4b ist eine Seitenansicht des ersten Endes 1b des Schwerlast-Transportfahrzeugs 1 in einer dritten Ausführungsform in den Beladungssituationen gemäß den Figuren 2a und 2b dargestellt. Die dritte Ausführungsform unterscheidet sich von der ersten Ausführungsform dadurch, dass der Positionierantrieb 7 zwei Positionierarme 7a umfasst, die nach Art einer Parallelogrammführung miteinander gekoppelt und drehbar an dem Fahrzeugrahmen 2 im Bereich der Ladefläche 2a gelagert sind. Jede der Führungen 6 ist hierbei unmittelbar an zwei Positionierarmen 7a drehbar gelagert. Auf diese Weise sind die jeweils über einen Antriebshebel 7j mit dem Positionierantrieb 7b verbundenen Positionierarme 7a derart gleichläufig bewegbar, dass die Führungsflächen 6a, 6b wie in der zweiten Ausführungsform in jeder Position, insbesondere in der Beladeposition (Figur 4a) und in der Freigabeposition (Figur 4b), vertikal ausgerichtet sind. Zur Versteifung der Positioniervorrichtung 7 können die zwei Führungen 6 auch über einen horizontalen Querträger 7c (in den Figuren 4a und 4b nicht dargestellt) miteinander verbunden sein, so dass die Positioniervorrichtung 7 insgesamt zwei Parallelogrammführungen umfasst. Alternativ kann jede Führung 6 über zwei Parallelogrammführungen gelagert sein.

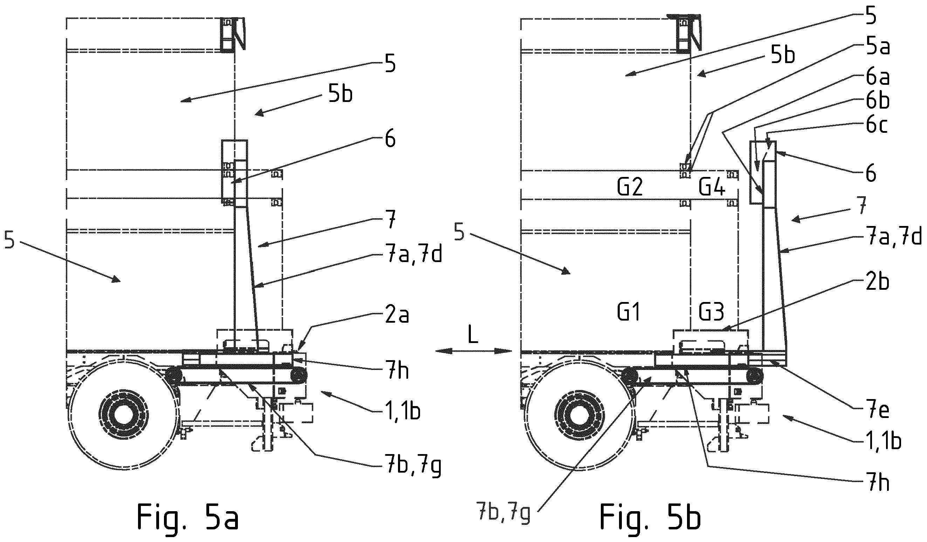

In den Figuren 5a und 5b ist eine Seitenansicht des ersten Endes 1b des Schwerlast-Transportfahrzeugs 1 in einer vierten Ausführungsform in den Beladungssituationen gemäß den Figuren 2a und 2b dargestellt. Die vierte Ausführungsform unterscheidet sich von den ersten drei Ausführungsformen dadurch, dass die Positionierarme 7a derart an dem Schwerlast-Transportfahrzeug 1 gelagert sind, dass die Positionierarme 7a zwischen der Beladeposition (Figur 5a) und der Freigabeposition (Figur 5b) translatorisch in der Längsrichtung L des Schwerlast-Transportfahrzeugs 1 bewegbar sind. Hierbei sind die Führungen 6 drehfest an den sich vertikal erstreckenden ersten Schenkeln 7d der Positionierarme 7a gelagert, so dass die ersten und zweiten Führungsflächen 6a und 6b in jeder Position der jeweiligen Führung 6, insbesondere in jeder von der Beladeposition abweichenden Position der Führung 6, vertikal ausgerichtet sind. Die Schenkel 7d, 7e der Positionierarme 7a sind dementsprechend L-förmig in einem Winkel von etwa 90 Grad zueinander angeordnet, wobei die sich horizontal erstreckenden zweiten Schenkel 7e vorzugsweise unterhalb der Ladefläche 2a entlang einer Linearführung 7h in der Längsrichtung L bewegbar sind. Hierfür ist der mit den zweiten Schenkeln 7e verbundene Positionierantrieb 7b ebenfalls als Linearantrieb ausgebildet, der einen Riementrieb 7g umfasst und so mit den Positionierarmen 7a gekoppelt, dass eine entsprechende Linearbewegung abgezweigt wird. Anstelle des Riementriebs 7g kann beispielsweise auch ein Kettentrieb, Ritzel-Zahnstangentrieb oder Hubzylinder, vorzugsweise Elektrozylinder oder Hydraulikzylinder, verwendet werden.

Die Führungen 6 können an dem Schwerlast-Transportfahrzeug 1 auch im Bereich seiner Längsseiten 1a angeordnet und quer zur der Längsrichtung L zwischen der Beladeposition und der Freigabeposition bewegbar sein. Zudem kann für jede Führung 6 eine eigene Positioniervorrichtung 7 vorgesehen sein, über die jede Führung 6 unabhängig von den anderen zwischen der Beladeposition und der Freigabeposition bewegbar ist.

Es ist außerdem grundsätzlich denkbar, lediglich eine Führung 6 stirnseitig an einem der Enden 1b und 1c vorzusehen, die bei entsprechender Dimensionierung das Ausrichten zumindest einer Kopfseite 5b und einer Längsseite 5c des zweiten Containers 5 ermöglicht, um den zweiten Container 5 beim Abstellen mit der erforderlichen Genauigkeit auf den ersten Container 5 zu führen und auf diesem zu sichern. Vorzugsweise werden jedoch alle vier Eckbeschläge 5a des oberen zweiten Containers 5 geführt und gesichert, wofür an beiden Enden 1a und 1b jeweils eine oder zwei entsprechend dimensionierte Führungen 6 vorgesehen sind.

Um zumindest einen Zweierstapel von 20 Fuß langen Containern 5 bilden und transportieren zu können, sind zusätzlich auch in der Mitte des Schwerlast-Transportfahrzeugs 1 zumindest eine Führung 6 und eine Positioniervorrichtung 7 vorzusehen, die entsprechender Weise zwischen einer Beladeposition und einer Freigabeposition bewegbar sind. Bei zwei Zweierstapeln sind die Führung 6 und die Positioniervorrichtung 7 dementsprechend zwischen den beiden unteren ersten Containern 5 angeordnet, um die innenliegenden Eckbeschläge 5a der beiden oberen zweiten Container 5 führen und sichern zu können.

Das Schwerlast-Transportfahrzeug 1 kann auch manuell oder halb-automatisch betrieben sein.

### Bezugszeichenliste

- 1: Schwerlast-Transportfahrzeug
- 1a: Längsseite
- 1b: erstes Ende
- 1c: zweites Ende
- 2: Fahrzeugrahmen
- 2a: Ladefläche
- 2b: Führungselement
- 2c: Stellfläche
- 2d: Sicherungselement
- 3a: Vorderachse
- 3b: Hinterachse
- 4a: vordere Räder
- 4b: hintere Räder
- 5: Container
- 5a: Eckbeschlag
- 5b: Kopfseite
- 5c: Längsseite
- 6: Führung
- 6a: erste Führungsfläche
- 6b: zweite Führungsfläche
- 6c: Einführfläche
- 6d: Anschlag
- 7: Positioniervorrichtung
- 7a: Positionierarm
- 7b: Positionierantrieb
- 7c: Querträger
- 7d: erster Schenkel
- 7e: zweiter Schenkel
- 7f: Hubzylinder
- 7g: Riementrieb
- 7h: Linearführung
- 7i: Strebe
- 7j: Antriebshebel
- G1: erste Größe
- G2: zweite Größe
- G3: dritte Größe
- G4: vierte Größe
- L: Längsrichtung
- P: Pendelachse
- S: Schwenkachse

## Patentansprüche

1. Schwerlast-Transportfahrzeug (1) für Container (5), insbesondere ISO-Container, das flurgebunden und nicht schienengebunden frei verfahrbar ist und eine Ladefläche (2a) aufweist, auf der ein erster Container (5) abstellbar ist, wobei auf dem ersten Container (5) ein zweiter Container (5) abstellbar ist und das Schwerlast-Transportfahrzeug (1) mindestens eine Führung (6) aufweist, mittels derer der zweite Container (5), insbesondere dessen untere Eckbeschläge (5a), beim Abstellen auf dem ersten Container (5), insbesondere auf dessen oberen Eckbeschlägen (5a), führbar ist, **dadurch gekennzeichnet, dass** die Führung (6) über eine Positioniervorrichtung (7) zwischen einer Beladeposition und einer Freigabeposition bewegbar ist.

2. Schwerlast-Transportfahrzeug (1) nach Anspruch 1, **dadurch gekennzeichnet, dass** in der Beladeposition die Führung (6) an dem ersten Container (5), vorzugsweise an einem oberen Eckbeschlag (5a) des ersten Containers (5), anliegt und in der Freigabeposition die Führung (6) von dem ersten Container (5) beabstandet angeordnet ist.

3. Schwerlast-Transportfahrzeug (1) nach Anspruch 1 oder 2, **dadurch gekennzeichnet, dass** die Führung (6) an mindestens einem Positionierarm (7a) der Positioniervorrichtung (7) gelagert ist, der an dem Schwerlast-Transportfahrzeug (1) translatorisch oder rotatorisch, vorzugsweise in einer Längsrichtung (L) des Schwerlast-Transportfahrzeugs (1), zwischen der Beladeposition und der Freigabeposition bewegbar gelagert ist.

4. Schwerlast-Transportfahrzeug (1) nach einem der Ansprüche 1 bis 3, **dadurch gekennzeichnet, dass** die Positioniervorrichtung (7) einen Positionierantrieb (7b) aufweist, über den die Positioniervorrichtung (7), insbesondere der Positionierarm (7a), bewegbar ist.

5. Schwerlast-Transportfahrzeug (1) nach Anspruch 4, **dadurch gekennzeichnet, dass** der Positionierantrieb (7b) als Linearantrieb ausgebildet ist und vorzugsweise einen unterhalb der Ladefläche (2a) angeordneten Riementrieb, Kettentrieb, Ritzel-Zahnstangentrieb oder Hubzylinder, insbesondere Elektrozylinder oder Hydraulikzylinder, umfasst.

6. Schwerlast-Transportfahrzeug (1) nach einem der Ansprüche 1 bis 5, **dadurch gekennzeichnet, dass** die Führung (6) eine erste Führungsfläche (6a) und eine zweite Führungsfläche (6b) aufweist, in der Beladeposition die erste Führungsfläche (6a) an einer Kopfseite (5b) des ersten Containers (5) und/oder die zweite Führungsfläche (6b) an einer Längsseite (5c) des ersten Containers (5), vorzugsweise an einem oberen Eckbeschlag (5a) des ersten Containers (5), anliegt.

7. Schwerlast-Transportfahrzeug (1) nach Anspruch 6, **dadurch gekennzeichnet, dass** sich in der Beladeposition die erste Führungsfläche (6a) und die zweite Führungsfläche (6b) über eine Höhe erstrecken, in der die oberen Eckbeschläge (5a) eines beliebigen auf der Ladefläche (2a) abgestellten Containers (5), insbesondere eines ISO-Containers mit einer Containerhöhe von 8 Fuß bis 9 Fuß und 6 Zoll, angeordnet sind und vorzugsweise in der Beladeposition die erste Führungsfläche (6a) parallel bezüglich der Kopfseite (5b) und die zweite Führungsfläche (6b) parallel bezüglich der Längsseite (5c) ausgerichtet ist.

8. Schwerlast-Transportfahrzeug (1) nach Anspruch 6 oder 7, **dadurch gekennzeichnet, dass** sich oberhalb der ersten Führungsfläche (6a) und oberhalb der zweiten Führungsfläche (6b) jeweils eine Einführfläche (6c) anschließt, die sich in der Beladeposition jeweils schräg nach oben und vom Container (5) weg gerichtet erstreckt.

9. Schwerlast-Transportfahrzeug (1) nach einem der Ansprüche 1 bis 8, **dadurch gekennzeichnet, dass** jede Führung (6) drehbar, insbesondere um eine quer, vorzugsweise horizontal, zu einer Längsrichtung (L) des Schwerlast-Transportfahrzeugs (1) ausgerichtete Pendelachse (P) pendelnd, oder drehfest an dem mindestens einen Positionierarm (7a) gelagert ist.

10. Schwerlast-Transportfahrzeug (1) nach Anspruch 9, **dadurch gekennzeichnet, dass** die Führung (6) derart drehbar gelagert ist, dass die Führungsflächen (6a, 6b) in jeder Position der Führung (6), insbesondere in jeder von der Beladeposition abweichenden Position der Führung (6), vertikal ausgerichtet sind.

11. Schwerlast-Transportfahrzeug (1) nach Anspruch 9, **dadurch gekennzeichnet, dass** die Führung (6a) im Bereich der Pendelachse (P) zwei Anschläge (6d) aufweist, um ein Pendeln der Führung (6a) um die Pendelachse (P) zu begrenzen.

12. Schwerlast-Transportfahrzeug (1) nach einem der Ansprüche 1 bis 11, **dadurch gekennzeichnet, dass** zwei Führungen (6) an einem ersten Ende (1b) und/oder zwei Führungen (6) an einem zweiten Ende (1c) des Schwerlast-Transportfahrzeugs (1) derart angeordnet sind, dass in der Beladeposition an dem ersten Ende (1b) und/oder an dem zweiten Ende (1c) an jedem der oberen Eckbeschlägen (5a) des ersten Containers (5) jeweils eine der Führungen (6) anliegt.

13. Schwerlast-Transportfahrzeug (1) nach Anspruch 12, **dadurch gekennzeichnet, dass** die zwei Führungen (6) an dem ersten Ende (1b) und/oder die zwei Führungen (6) an dem zweiten Ende (1c) jeweils miteinander verbunden sind, vorzugsweise an einem Querträger (7c) gelagert sind, und über den mindestens einen Positionierarm (7a) gleichläufig bewegbar sind.

14. Schwerlast-Transportfahrzeug (1) nach einem der Ansprüche 6 bis 12, **dadurch gekennzeichnet, dass** jede Führung (6) drehbar an zwei Positionierarmen (7a) gelagert ist, die nach Art einer Parallelogrammführung miteinander gekoppelt und über den Positionierantrieb (7b) gleichläufig bewegbar gelagert sind.

15. Schwerlast-Transportfahrzeug (1) nach einem der Ansprüche 1 bis 14, **dadurch gekennzeichnet, dass** das Schwerlast-Transportfahrzeug (1) als fahrerloses Transportfahrzeug ausgebildet ist.

16. Verfahren zum Beladen eines Schwerlast-Transportfahrzeugs (1) nach einem der Ansprüche 1 bis 15, wobei in einem ersten Beladungsschritt der erste Container (5) auf der Ladefläche (2a) abgestellt wird, **dadurch gekennzeichnet, dass** während des ersten Beladungsschritts jede Führung (6) in der Freigabeposition angeordnet ist und nach dem Abstellen des ersten Containers (5) jede Führung (6) in die Beladeposition bewegt wird.

17. Verfahren nach Anspruch 16, **dadurch gekennzeichnet, dass** in einem zweiten Beladungsschritt der zweite Container (5) auf dem ersten Container (5) abgestellt wird und hierbei der zweite Container (5), insbesondere dessen untere Eckbeschläge (5a), über mindestens eine Führung (6) auf den ersten Container (5), insbesondere auf dessen obere Eckbeschläge (5a), geführt wird.

## Claims

1. Heavy-duty transport vehicle (1) for containers (5), in particular ISO containers, which is freely movable on floors, and not rail-bound, and has a loading surface (2a) on which a first container (5) can be placed, wherein a second container (5) can be placed on the first container (5) and the heavy-duty transport vehicle (1) has at least one guide (6) for guiding the second container (5), in particular the bottom corner fittings (5a) thereof, when it is placed on the first container (5), in particular on the top corner fittings (5a) thereof, **characterised in that** the guide (6) can be moved between a loading position and a release position by means of a positioning apparatus (7).

2. Heavy-duty transport vehicle (1) as claimed in claim 1, **characterised in that** in the loading position the guide (6) lies against the first container (5), preferably against a top corner fitting (5a) of the first container (5), and in the release position the guide (6) is arranged spaced apart from the first container (5).

3. Heavy duty transport vehicle (1) as claimed in claim 1 or 2, **characterised in that** the guide (6) is mounted on at least one positioning arm (7a) of the positioning apparatus (7), said positioning arm being mounted on the heavy-duty transport vehicle (1) so as to be movable in a translatory or rotatory manner, preferably in a longitudinal direction (L) of the heavy-duty transport vehicle (1), between the loading position and the release position.

4. Heavy-duty transport vehicle (1) as claimed in any one of claims 1 to 3, **characterised in that** the positioning apparatus (7) has a positioning drive (7b) by means of which the positioning apparatus (7), in particular the positioning arm (7a), can be moved.

5. Heavy-duty transport vehicle (1) as claimed in claim 4, **characterised in that** the positioning drive (7b) is designed as a linear drive and preferably comprises a belt drive, chain drive, rack and pinion drive or a lifting cylinder, in particular an electric cylinder or hydraulic cylinder, arranged underneath the loading surface (2a).

6. Heavy-duty transport vehicle (1) as claimed in any one of claims 1 to 5, **characterised in that** the guide (6) has a first guide surface (6a) and a second guide surface (6b), in the loading position the first guide surface (6a) lies against a head side (5b) of the first container (5) and/or the second guide surface (6b) lies against a longitudinal side (5c) of the first container (5), preferably against a top corner fitting (5a) of the first container (5).

7. Heavy-duty transport vehicle (1) as claimed in claim 6, **characterised in that** in the loading position the first guide surface (6a) and the second guide surface (6b) extend over a height at which the top corner fittings (5a) of any container (5) placed on the loading surface (2a), in particular an ISO container with a container height of 8 foot to 9 foot, 6 inches, are arranged and preferably in the loading position the first guide surface (6a) is oriented in parallel in relation to the head side (5b) and the second guide surface (6b) is oriented in parallel in relation to the longitudinal side (5c).

8. Heavy-duty transport vehicle (1) as claimed in claim 6 or 7, **characterised in that** an insertion surface (6c) adjoins in each case above the first guide surface (6a) and above the second guide surface (6b) and extends in the loading position in each case obliquely upwards and in a manner directed away from the container (5).

9. Heavy-duty transport vehicle (1) as claimed in any one of claims 1 to 8, **characterised in that** each guide (6) is mounted in a rotatable manner, in particular oscillating about an axis of oscillation (P) oriented transversely, preferably horizontally, with respect to a longitudinal direction (L) of the heavy-duty transport vehicle (1), or in a rotationally fixed manner on the at least one positioning arm (7a).

10. Heavy-duty transport vehicle (1) as claimed in claim 9, **characterised in that** the guide (6) is mounted in a rotatable manner such that the guide surfaces (6a, 6b) are oriented vertically in each position of the guide (6), in particular in each position of the guide (6) deviating from the loading position.

11. Heavy-duty transport vehicle (1) as claimed in claim 9, **characterised in that** the guide (6a) has two stops (6d) in the region of the axis of oscillation (P), in order to limit oscillation of the guide (6a) about the axis of oscillation (P).

12. Heavy-duty transport vehicle (1) as claimed in any one of claims 1 to 11, **characterised in that** two guides (6) are arranged at a first end (1b) and/or two guides (6) are arranged at a second end (1c) of the heavy-duty transport vehicle (1) such that in the loading position in each case one of the guides (6) lies at the first end (1b) and/or at the second end (1c) against each of the top corner fittings (5a) of the first container (5).

13. Heavy-duty transport vehicle (1) as claimed in claim 12, **characterised in that** the two guides (6) are each connected to one another at the first end (1b) and/or the two guides (6) are each connected to one another at the second end (1c), preferably mounted on a transverse beam (7c), and can be moved in a synchronised manner by means of the at least one positioning arm (7a).

14. Heavy-duty transport vehicle (1) as claimed in any one of claims 6 to 12, **characterised in that** each guide (6) is rotatably mounted on two positioning arms (7a) which are coupled to one another in the manner of a parallelogram guide and are mounted so as to be movable in a synchronised manner via the positioning drive (7b).

15. Heavy-duty transport vehicle (1) as claimed in any one of claims 1 to 14, **characterised in that** the heavy-duty transport vehicle (1) is designed as an automated guided vehicle.

16. Method for loading a heavy-duty transport vehicle (1) as claimed in any one of claims 1 to 15, wherein in a first loading step the first container (5) is placed on the loading surface (2a), **characterised in that** during the first loading step each guide (6) is arranged in the release position and after the first container (5) has been placed each guide (6) is moved to the loading position.

17. Method as claimed in claim 16, **characterised in that** in a second loading step the second container (5) is placed on the first container (5) and in this case the second container (5), in particular the bottom corner fittings (5a) thereof, is guided via at least one guide (6) onto the first container (5), in particular onto the top corner fittings (5a) thereof.

## Revendications

1. Véhicule de transport de charges lourdes (1) destiné à des conteneurs (5), en particulier des conteneurs ISO, qui est déplaçable librement en étant lié au sol et sans être lié à un rail, et qui comporte une surface de chargement (2a) sur laquelle un premier conteneur (5) peut être placé, un deuxième conteneur (5) pouvant être placé sur le premier conteneur (5) et le véhicule de transport de charges lourdes (1) comportant au moins un guide (6) permettant de guider le deuxième conteneur (5), en particulier ses ferrures d'angle inférieures (5a), lorsqu'il est placé sur le premier conteneur (5), en particulier sur ses ferrures d'angle supérieures (5a), **caractérisé en ce que** le guide (6) peut être déplacé entre une position de chargement et une position de libération par le biais d'un dispositif de positionnement (7).

2. Véhicule de transport de charges lourdes (1) selon la revendication 1, **caractérisé en ce que**, dans la position de chargement, le guide (6) vient en appui sur le premier conteneur (5), de préférence sur une ferrure d'angle supérieure (5a) du premier conteneur (5), et, dans la position de libération, le guide (6) est disposé à distance du premier conteneur (5).

3. Véhicule de transport de charges lourdes (1) selon la revendication 1 ou 2, **caractérisé en ce que** le guide (6) est monté sur au moins un bras de positionnement (7a) du dispositif de positionnement (7), lequel bras de positionnement est monté sur le véhicule de transport de charges lourdes (1) de manière mobile en translation ou en rotation, de préférence dans une direction longitudinale (L) du véhicule de transport de charges lourdes (1), entre la position de chargement et la position de libération.

4. Véhicule de transport de charges lourdes (1) selon l'une des revendications 1 à 3, **caractérisé en ce que** le dispositif de positionnement (7) comporte un entraînement de positionnement (7b) permettant de déplacer le dispositif de positionnement (7), en particulier le bras de positionnement (7a).

5. Véhicule de transport de charges lourdes (1) selon la revendication 4, **caractérisé en ce que** l'entraînement de positionnement (7b) est réalisé sous la forme d'un entraînement linéaire, de préférence un entraînement par courroie, un entraînement par chaîne, un entraînement par crémaillère et pignon ou un vérin de levage, en particulier un vérin électrique ou un vérin hydraulique, disposé au-dessous de la surface de chargement (2a).

6. Véhicule de transport de charges lourdes (1) selon l'une des revendications 1 à 5, **caractérisé en ce que** le guide (6) comporte une première surface de guidage (6a) et une deuxième surface de guidage (6b), **en ce que** dans la position de chargement (6a) la première surface de guidage venant en appui sur un côté tête (5b) du premier conteneur (5) et/ou la deuxième surface de guidage (6b) venant en appui sur un côté longitudinal (5c) du premier conteneur (5), de préférence sur une ferrure d'angle supérieure (5a) du premier conteneur (5).

7. Véhicule de transport de charges lourdes (1) selon la revendication 6, **caractérisé en ce que**, dans la position de chargement, la première surface de guidage (6a) et la deuxième surface de guidage (6b) s'étendent à une hauteur à laquelle sont disposées les ferrures d'angle supérieures (5a) d'un quelconque conteneur (5) placé sur la surface de chargement (2a), en particulier d'un conteneur ISO ayant une hauteur de 8 pieds à 9 pieds et 6 pouces, et, de préférence, dans la position de chargement, la première surface de guidage (6a) étant orientée parallèlement à la partie tête (5b) et la deuxième surface de guidage (6b) étant orientée parallèlement au côté longitudinal (5c).

8. Véhicule de transport de charges lourdes (1) selon la revendication 6 ou 7, **caractérisé en ce qu'**une surface d'entrée (6c), qui s'étend, dans la position de chargement, obliquement vers le haut à l'opposé du conteneur (5), se raccorde au-dessus de la première surface de guidage (6a) et au-dessus de la deuxième surface de guidage (6b).

9. Véhicule de transport de charges lourdes (1) selon l'une des revendications 1 à 8, **caractérisé en ce que** chaque guide (6) est monté à rotation, en particulier de manière oscillante sur un axe d'oscillation (P) orienté de préférence horizontalement, par rapport à une direction longitudinale (L) du véhicule de transport de charges lourdes (1), ou solidairement en rotation sur l'au moins un bras de positionnement (7a).

10. Véhicule de transport de charges lourdes (1) selon la revendication 9, **caractérisé en ce que** le guide (6) est monté à rotation de telle sorte que les surfaces de guidage (6a, 6b) soient orientées verticalement dans chaque position du guide (6), en particulier dans chacune position du guide (6) s'écartant de la position de chargement.

11. Véhicule de transport de charges lourdes (1) selon la revendication 9, **caractérisé en ce que** le guide (6a) comporte deux butées (6d) dans la région de l'axe d'oscillation (P) pour limiter une oscillation du guide (6a) sur l'axe d'oscillation (P).

12. Véhicule de transport de charges lourdes (1) selon l'une des revendications 1 à 11, **caractérisé en ce que** deux guides (6) sont disposés à une première extrémité (1b) et/ou deux guides (6) sont disposés à une deuxième extrémité (1c) du véhicule de transport de charges lourdes (1) de telle sorte que, dans la position de chargement, un des guides (6) vient en appui, à la première extrémité (1b) et/ou à la deuxième extrémité (1c), sur chacune des ferrures d'angle supérieures (5a) du premier conteneur (5).

13. Véhicule de transport de charges lourdes (1) selon la revendication 12, **caractérisé en ce que** les deux guides (6) sont reliés entre eux à la première extrémité (1b) et/ou les deux guides (6) sont reliés entre eux à la deuxième extrémité (1c), de préférence montés sur une traverse (7c) et déplaçables de manière synchrone par le biais de l'au moins un bras de positionnement (7a).

14. Véhicule de transport de charges lourdes (1) selon l'une des revendications 6 à 12, **caractérisé en ce que** chaque guide (6) est monté en rotation sur deux bras de positionnement (7a) qui sont accouplés à la manière d'un guide parallélogramme et sont montés de manière déplaçable de façon synchrone par le biais de l'entraînement de positionnement (7b).

15. Véhicule de transport de charges lourdes (1) selon l'une des revendications 1 à 14, **caractérisé en ce que** le véhicule de transport de charges lourdes (1) est conçu comme un véhicule de transport sans conducteur.

16. Procédé de chargement d'un véhicule de transport de charges lourdes (1) selon l'une des revendications 1 à 15, le premier conteneur (5) est placé sur la zone de chargement (2a) dans une première étape de chargement, **caractérisé en ce que**, lors de la première étape de chargement, chaque guide (6) est disposé dans la position de libération et, après le placement du premier conteneur (5), chaque guide (6) est déplacé vers la position de chargement.

17. Procédé selon la revendication 16, **caractérisé en ce que**, dans une deuxième étape de chargement, le deuxième conteneur (5) est placé sur le premier conteneur (5) et le deuxième conteneur (5), en particulier ses ferrures d'angle inférieures (5a), est guidé par le biais d'au moins un guide (6) sur le premier conteneur (5), en particulier sur les ferrures d'angle supérieures (5a).
